# EUROPÄISCHE PATENTSCHRIFT

(11) **EP 2 735 406 B1**
(45) Veröffentlichungstag und Bekanntmachung des Hinweises auf die Patenterteilung: **04.04.2018**
(21) Anmeldenummer: 12007961.1
(22) Anmeldetag: 27.11.2012
(51) Int. Cl.: B25J 15/00, B25J 15/10, B25J 15/12

(54) **Greifeinrichtung zum Greifen von Objekten**
Gripper device for gripping objects
Dispositif de saisie destiné à saisir des objets

(43) Veröffentlichungstag der Anmeldung: 28.05.2014
(73) Patentinhaber: FESTO AG & Co. KG, 73734 Esslingen (DE)
(72) Erfinder: Thallemer, Axel, 80796 München (DE); Diensthuber, Dominik, 4652 Fischlham (AT)
(74) Vertreter: Patentanwälte Magenbauer & Kollegen Partnerschaft mbB

(56) Entgegenhaltungen:
- EP-A1- 2 241 403
- EP-A1- 2 392 272
- WO-A1-2010/108662
- WO-A2-2004/028753
- US-A- 5 795 002

## Beschreibung

Die Erfindung betrifft eine Greifeinrichtung zum Greifen von Objekten, mit wenigstens zwei Greifeinheiten, die durch eine Arbeitsbewegung zwischen einer Freigabestellung und einer das Objekt greifenden Greifstellung bewegbar sind, wobei die Greifeinheiten jeweils Greifelemente aufweisen, die mit Wirkelementen bestückt sind, die in der Greifstellung in Anlage zum zu greifenden Objekt sind, wobei das Wirkelement ein Wirkglied aus sich an die Kontur des zu greifenden Objekts anpassendem biegeschlaffem Material aufweist, und wobei eine Spanneinrichtung zum Spannen des Wirkglieds bei Anlage an das zu greifende Objekt vorgesehen ist, dadurch gekennzeichnet, dass die Spanneinrichtung wenigstens einen Stoßdämpfer aufweist.

Bei Greifern wird die Greifkraft über Wirkelemente, die auch als Wirkorgane bezeichnet werden könnten, auf das Greifobjekt übertragen. Beim Greifvorgang kommt daher das Wirkelement in Kontakt mit dem Objekt. Die am Wirkelement ausgebildete Greiffläche und die am Objekt vorhandene Grifffläche bilden gemeinsam eine Wirkfläche, die für den Griff und für das Festhalten des gegriffenen Objekts eine wichtige Rolle spielt.

Die WO 2010/108 662 A1 offenbart eine Greifervorrichtung, bei der die Greifelemente als Flossenstrahlelemente ausgebildet sind. Die Flossenstrahlelemente bestehen jeweils aus zwei biegeflexiblen aus Kunststoffmaterial gefertigten als Wirkglieder ausgebildete Lamellen, die am freien Ende miteinander verbunden sind und unter Bildung einer drei ecksartigen Anordnung beabstandet voneinander an einer Greiferbasis fixiert sind. Die beiden Lamellen sind über mehrere parallel zueinander verlaufende Streben miteinander verbunden, die jeweils an ihren Endbereich gelenkig mit den Lamellen verbunden sind. Beim Greifen eines Objekts, beispielsweise einer Kugel, formen sich die Lamellen an die Objektoberfläche an, da die Lamellen über die Streben relativ beweglich zueinander sind. Nach Freigabe des Objekts formen sich die Lamellen selbsttätig in die Grundstellung zurück.

Die US 5,795,002 offenbart ein Wirkglied aus biegeflexiblem Elastomermaterial.

Die EP 2 241 403 A1 offenbart ein Manipulatorwerkzeug und Halte- und Spreizwerkzeug, wobei das Manipulatorwerkzeug an seinem proximalen Ende an einer Werkzeugbasis befestigt ist. Das distale Ende ist frei beweglich. Das Manipulatorwerkzeug weist zwei Wangen auf, von denen die eine Wange wenigstens biegefest und biegesteif und die andere Wange wenigstens zugfest ist. Die wenigstens eine zugfeste Wange kann aus einem biegeschlaffen Zugmittel, wie beispielsweise Seil, Riemen, Band oder Kette, gebildet sein. Ferner ist offenbart, dass die beiden Wangen an ihrem proximalen Ende zusammengeführt sind und in einem gemeinsamen Zugmittel enden.

Aufgabe der Erfindung ist es, eine Greifvorrichtung der eingangs erwähnten Art zu schaffen, mit denen sich Objekte optimal greifen lassen.

Diese Aufgabe wird durch eine Greifeinrichtung mit den Merkmalen des unabhängigen Anspruchs 1 gelöst. Weiterbildungen der Erfindung sind in den Unteransprüchen dargestellt.

Die erfindungsgemäße Greifeinrichtung zeichnet sich dadurch aus, dass die Spanneinrichtung wenigstens einen Stoßdämpfer aufweist.

Ein derartig ausgestaltetes Wirkglied kann sich also optimal an die Oberfläche des zu greifenden Objekts anpassen. Beispielsweise ist es möglich, dass sich das Wirkglied an konvexe Wölbungen voluminöser Körper anlegt. Dadurch wird eine relativ große Wirkfläche geschaffen, was sich positiv auf den Greifvorgang und das anschließende Handhaben des gegriffenen Objekts auswirkt.

Bei einer Weiterbildung der Erfindung ist das Wirkglied bandförmig ausgebildet.

In besonders bevorzugter Weise handelt es sich bei dem biegeschlaffen Material um ein Gelege, Gewebe oder Gestricke. Im Falle eines Geleges kann es sich um ein biaxiales oder multiaxiales Gelege handeln.

Besonders bevorzugt ist ein aus Kunststofffasern bestehendes Gelege vorgesehen. Als Kunststofffasern eignen sich beispielsweise Aramidfasern. Es können jedoch auch andere, insbesondere polymere Kunststofffasern eingesetzt werden.

Um das biegeschlaffe Material des Wirkglieds vor Beschädigung zu schützen, ist das biegeschlaffe Material des Wirkglieds mit einem Schutzmantel versehen.

Der Schutzmantel kann beispielsweise aus Elastomermaterial bestehen.

Die Greifeinrichtung umfasst eine Spanneinrichtung zum Spannen des Wirkglieds bei Anlage an das zu greifende Objekt. Bei Anlage des biegeschlaffen Wirkglieds an das Objekt ist mittels der Spanneinrichtung ein Gegendruck erzeugbar, der das gegriffene Objekt festhält.

Die Spanneinrichtung weist wenigstens einen Stoßdämpfer auf, der den Gegendruck erzeugt. Der Stoßdämpfer kann beispielsweise als Gasdruckfeder ausgebildet sein.

Bei einer Weiterbildung der Erfindung weist das Greifelement eine Greifelementbasis mit einer Befestigungsschnittstelle zur lösbaren Befestigung des Wirkelements auf. Dadurch wird eine große Modularität geschaffen, da die Wirkelemente gewechselt werden können, ohne dass die Greifelementbasis gewechselt wird.

In besonders bevorzugter Weise sind wenigstens drei Greifeinheiten vorgesehen, die derart um ein Greifzentrum herum gruppiert sind, dass die wenigstens drei Arbeitsebenen ihrer Greifelemente winkelig und radial bezüglich des Greifzentrums oder parallel versetzt zueinander ausgerichtet sind.

Besonders bevorzugt ist wenigstens zwei der drei Greifeinheiten eine Verstellantriebseinrichtung mit wenigstens einem Verstellantrieb zugeordnet, um die Arbeitsebenen der Greifelemente aktuatorisch durch eine Verstellbewegung zwischen radialer und parallel zueinander versetzter Ausrichtung zu verstellen. Dadurch ist es möglich, zwischen linearem Greifen und räumlichem Greifen zu wechseln, ohne dass einzelne Greifeinheiten ummontiert werden müssen. Mit einer solchen Greifeinrichtung ist also entweder ein Raumgriff oder ein Lineargriff mit zueinander parallel versetzten Arbeitsebenen der Greifelemente durchführbar. Dadurch ist es möglich, die Greifeinrichtung an unterschiedliche Greifaufgaben anzupassen und somit unterschiedlich ausgebildete Objekte zu greifen. Beispielsweise eignet sich der Raumgriff insbesondere zum Greifen von voluminösen Körpern, während der Lineargriff eher zum Greifen von flächigen Objekten geeignet ist. Die Kombination biegeschlaffes Wirkglied und Raumgriff erzeugt ein optimales Greifen von voluminösen Körpern.

Bei einer Weiterbildung der Erfindung weisen die Greifeinheiten jeweils eine Basiseinheit auf, die eine Befestigungsschnittstelle zur lösbaren Befestigung der zugeordneten Greifelemente aufweisen. Durch diese Ausgestaltung wird eine Greifeinrichtung mit hoher Modularität geschaffen, da die Basiseinheit mit unterschiedlich ausgebildeten Greifelementen bestückt werden kann. Ferner ist es möglich, dass nicht alle Befestigungsschnittstellen mit Greifelementen bestückt sind, wodurch die Anzahl der aktiven Greifeinheiten variabel einstellbar ist. Auch dadurch ist eine große Variabilität und Anpassung an die zu leistende Greifaufgabe möglich.

Bei einer Weiterbildung der Erfindung weisen die Greifeinheiten jeweils einen individuellen Greifantrieb auf, über den die Arbeitsbewegung zwischen der Greif- und der Offenstellung erzeugbar ist. Dadurch ist eine ganz individuelle Ansteuerung der Greifeinheiten unabhängig voneinander möglich, wodurch sich eine höhere Variabilität beim Greifen ergibt.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines ersten Ausführungsbeispiels der erfindungsgemäßen Greifeinrichtung mit den Greifeinheiten in Offenstellung,
- Figur 2: die Greifeinrichtung von Figur 1 mit den Greifeinheiten in Greifstellung,
- Figur 3: eine schematische Darstellung der Greifeinrichtung ohne Greifelemente,
- Figur 4: eine schematische Darstellung zweier verstellbarer Greifeinheiten, die für den Lineargriff ausgerichtet sind,
- Figur 5: eine schematische Darstellung zweier Greifeinheiten, die für den Raumgriff ausgerichtet sind,
- Figur 6: eine schematische Darstellung der kinematischen Kette zur Übertragung der Verstellbewegung vom Verstellantrieb auf die verstellbaren Greifeinheiten,
- Figur 7: die Ausgestaltung der in Figur 6 gezeigten kinematischen Kette in Form eines Gelenkgetriebes,
- Figur 8: eine perspektivische Darstellung eines zweiten Ausführungsbeispiels der erfindungsgemäßen Greifeinrichtung, bei dem die Greifelemente in Offenstellung sind,
- Figur 9: die Greifeinrichtung von Figur 8 mit den Greifeinheiten in Greifstellung,
- Figur 10: eine schematische Darstellung eines Greifantriebs in eingefahrener Stellung,
- Figur 11: der Greifantrieb von Figur 10 in ausgefahrener Stellung,
- Figur 12: eine Ausführungsform eines Wirkelements, mit dem ein Greifelement bestückbar ist,
- Figur 13: eine alternative Ausführungsform eines Wirkelements,
- Figur 14: eine schematische Draufsicht auf die Greifeinrichtung mit zwei Greifeinheiten für den Lineargriff, wobei diese Ausführungsform nicht zur Erfindung gehört,
- Figur 15: eine Draufsicht auf die Greifeinrichtung, bestückt mit drei Greifeinheiten, ausgerichtet für den Raumgriff,
- Figur 16: eine Draufsicht auf die Greifeinrichtung von Figur 15 mit den Greifeinheiten, ausgerichtet für den Lineargriff und
- Figur 17: eine Draufsicht auf die Greifeinrichtung, bestückt mit vier Greifeinheiten.

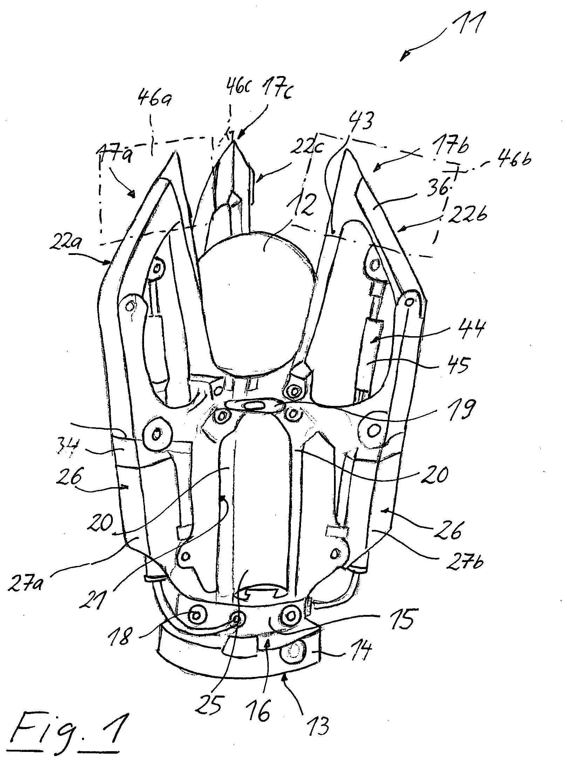

Die Figur 1 zeigt ein erstes Ausführungsbeispiel der erfindungsgemäßen Greifeinrichtung 11. Die Greifeinrichtung 11 dient zum Greifen von Objekten 12 unterschiedlicher Art.

Die Greifeinrichtung 11 befindet sich in der Regel an einem Handhabungsgerät (nicht dargestellt), das auch als Greiferführungsgetriebe bezeichnet werden kann. Die Hauptaufgabe der Greifeinrichtung 11 ist das Herstellen, Aufrechterhalten und Lösen der Verbindung zwischen dem Objekt 12 und dem Handhabungsgerät. Je nach Anwendungszahl kommen zusätzliche Sonderfunktionen wie Änderung der Position des Objekts, Änderung der Orientierung des Objekts und/oder Informationsaufnahme von Objekteigenschaften oder anderen Eigenschaften, beispielsweise mit Hilfe von Sensoren hinzu. Es können beispielsweise Anwesenheitskontrolle, Positions- und Lageerkennung für Objekte, sowie Kraft-, Moment- und Wegmessungen durchgeführt werden.

Die Greifeinrichtung 11 besitzt eine Kopplungsschnittstelle 13 zur Ankopplung an das Greiferführungsgetriebe, das beispielsweise ein Industrieroboter sein kann. Diese Kopplungsschnittstelle 13 ist im Beispielsfall an einer Adapterplatte 14 ausgebildet, die an einer zugeordneten Montageplatte des Industrieroboters montiert werden kann.

Die Adapterplatte 14 ist über eine Zentriervorrichtung 16 mit einer Belüftungsplatte 15 gekoppelt, die ihrerseits mehrere Greifeinheiten 17a, 17b, 17c trägt.

Die Zentriervorrichtung 16 kann beispielsweise ein in der Adapterplatte 14 eingelassenes Passungsloch (nicht dargestellt) umfassen, in das ein von der Unterseite der Belüftungsplatte 15 nach unten abstehender Zentrierzapfen eintaucht und dort mittels Befestigungsmitteln gesichert ist.

Wie insbesondere in Figur 1 dargestellt, ist die Belüftungsplatte 15 Teil eines Belüftungssystems für die im Beispielsfall pneumatischen Greifeinrichtung, auf die nachfolgend noch näher eingegangen wird.

Am Außenumfang der Belüftungsplatte 15 sitzen mehrere Fluidanschlüsse 18, über die Druckfluid, insbesondere Druckluft eingespeist und im Falle von Arbeits-Fluidanschlüssen an die entsprechenden Antriebe weiterleitbar ist. Je nachdem mit wie viel Greifeinheiten 17a-c die Greifeinrichtung 11 bestückt ist, fungiert auch dieselbe Anzahl von Fluidanschlüssen als Arbeits-Fluidanschlüsse zur Versorgung der dort angeordneten Antriebe.

Auf der Belüftungsplatte 15 ist ein Grundkörper 19 montiert, der seinerseits Bestandteil der Greifeinheiten 17a-c ist. Der Grundkörper 19 bildet somit auch das Greifzentrum, um das herum die Greifeinheiten 17a-c herum gruppiert sind.

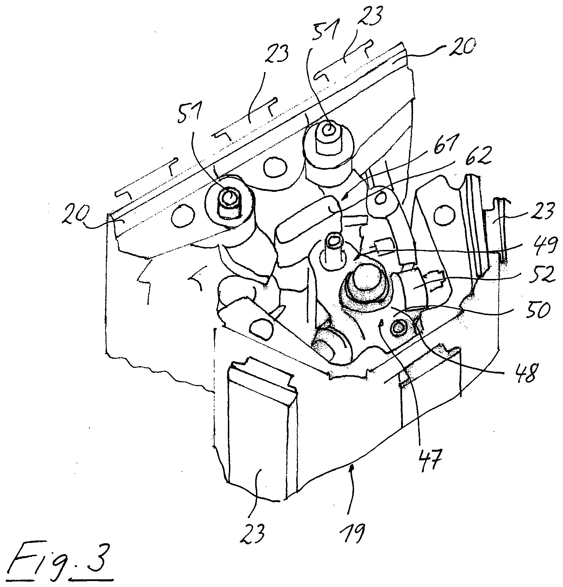

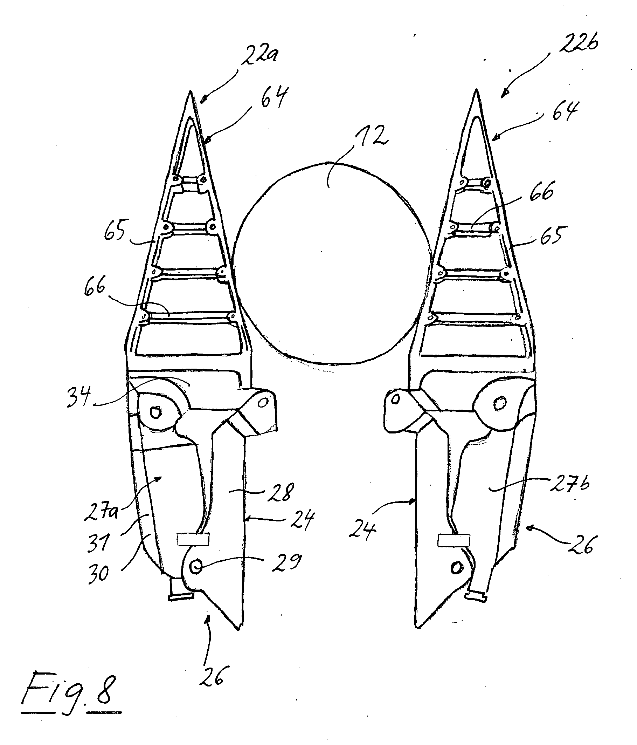

Wie insbesondere in Figur 1 dargestellt, besitzen die Greifeinheiten 17a-c jeweils eine Basiseinheit 20, die eine Befestigungsschnittstelle 21 zur lösbaren Befestigung eines zugeordneten Greifelements 22 aufweisen. Die Befestigungsschnittstelle 21 umfasst eine T-förmig ausgebildete Befestigungsnut 23 (Figur 3), auf die ein zugeordneter Montageabschnitt 24 (Figur 8) des Greifelements 22 in einfacher Weise aufschiebbar ist.

Wird die Befestigungsschnittstelle 21 am Basiselement 20 nicht genutzt, so wird die Befestigungsnut 23 mittels einer Nutabdeckung 25 abgedeckt.

Zu den Greifeinheiten 17a-c zählen neben den bereits erwähnten Basiseinheiten 20 die zugeordneten Greifelemente 22a-c. Im in Figur 1 dargestellten Beispielsfall sind drei Befestigungsschnittstellen der Basiseinheiten 20 mit Greifelementen 22a-c bestückt. Im Beispielsfall sind insgesamt sechs Befestigungsschnittstellen 21 vorgesehen, wovon drei ungenutzt sind. Insgesamt ergibt sich durch die sechs Befestigungsschnittstelle eine hexagonale Form des Grundkörpers 19. Die Greifeinrichtung 11 wäre im Beispielsfall also mit maximal sechs Greifeinheiten 17a-f ausrüstbar.

Die Greifelemente 22a-c umfassen eine Greifelement-Basis 26, an der der Montageabschnitt 24 zur Befestigung an der zugeordneten Befestigungsnut 23 der Basiseinheit 20 ausgebildet ist.

Charakteristisch ist, dass jeder Greifeinheit 17a-c ein Greifantrieb 27a-c zugeordnet ist. Die Greifantriebe 27a-c sind an Bord des Greifelements 22 untergebracht, befinden sich also nicht an der Basiseinheit 20 der Greifeinheit 17a-c. Der Greifantrieb 27a-c erzeugt die Arbeitsbewegung mittels der Greifelemente 22a-c, die zwischen der Greif- und der Offenstellung verstellbar sind. Die Figur 1 zeigt jedenfalls die Offenstellung der Greifeinheiten 17a-c.

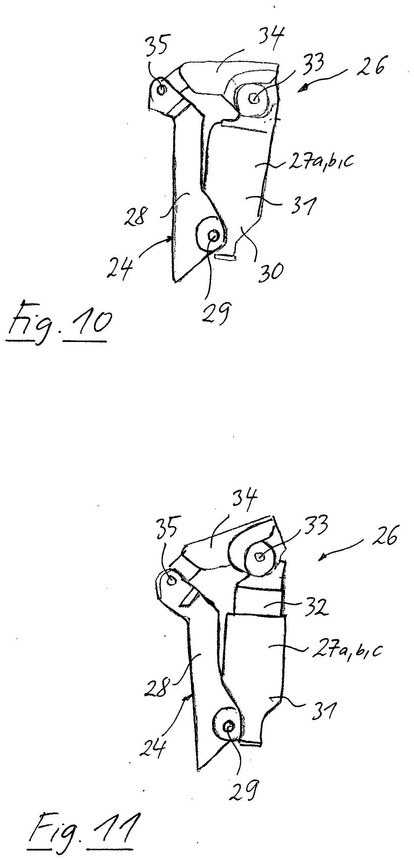

Die Figuren 10 und 11 zeigen eine Greifelement-Basis 26 mit integriertem Greifantrieb 27a-c. Die Greifelementbasis 26 besitzt insgesamt eine Winkelgreiferkinematik und ist als eine Art Kniehebel ausgestaltet. Es ist ein erster Hebelarm 28 vorgesehen, an dessen Rückseite der zuvor bereits erwähnte Montageabschnitt 24 ausgebildet ist, der auf die zugeordnete Befestigungsnut 23 aufschiebbar ist. Der erste Hebelarm 28 der Greifelement-Basis 26 ist somit ortsfest und unverschwenkbar an der zugeordneten Basiseinheit 20 gelagert. Der erste Hebelarm 28 ist über ein erstes Gelenk 29 mit einem zweiten Hebelarm 30 verbunden, der um das erste Gelenk 29 verschwenkbar am ersten Hebelarm 28 gelagert ist. Der zweite Hebelarm 30 besitzt ein Gehäuse 31, in dem sich der Greifantrieb 27a-c befindet. Der Gelenkantrieb 27a-c ist im Beispielsfall ein pneumatisch betriebener Arbeitszylinder in Miniaturbauform, der beispielsweise an seinem Außenumfang ein Außengewinde aufweist und in ein im Gehäuse 31 befindliches Innengewinde eingeschraubt ist. Der Arbeitszylinder wiederum besitzt ein Zylindergehäuse (nicht dargestellt), in dem ein Kolben (nicht dargestellt) mittels Fluiddruck verschieblich gelagert ist. An dem Kolben ist ein Abtriebsteil 32 ausgebildet, das gemäß Figur 10 in das Zylindergehäuse eingefahren und gemäß Figur 11 aus dem Zylindergehäuse ausgefahren ist. An dem Abtriebsteil 32 ist über ein weiteres Gelenk 33 ein sogenanntes Wirksystembasis-Glied 34 schwenkbar gelagert, das andernends um eine Schwenkachse 35 schwenkbar mit dem ersten Hebelarm 28 verbunden ist. Wie die Zusammenschau von Figur 10 und Figur 11 zeigt, wird mittels des Greifantriebs 27a-c die Winkelstellung des Wirksystembasis-Glieds 34 verändert, das dabei um die Schwenkachse 35 geschwenkt wird.

Wie insbesondere in Figur 1 dargestellt, umfasst das Greifelement 22a-c neben der zuvor beschriebenen Greifelement-Basis ein Wirkelement 36, das an einer Befestigungsschnittstelle am Wirksystembasis-Glied 34 lösbar befestigt ist und in der Greifstellung in Anlage zum Objekt 12 liegt.

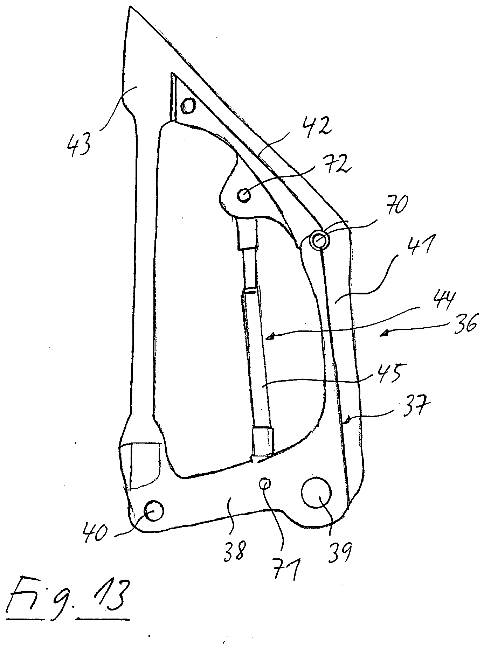

Wie insbesondere in Figur 13 dargestellt, ist das gemäß dem ersten Ausführungsbeispiel eingesetzte Wirkelement 36 ebenfalls kniehebelartig ausgestaltet. Es besitzt ein gabelartiges Hebelteil 37 mit einem ersten Hebelschenkel 38, der sich von einer mit dem Gelenk 33 an der Greifelement-Basis erstreckenden Gelenkstelle 39 zu einer mit der Schwenkachse 35 verbundenen weiteren Gelenkstelle 40 erstreckt. Das Wirkelement 36 ist also insgesamt mit diesem Hebelschenkel 38 am Wirksystembasis-Glied 34 gelenkig montiert. Das Hebelteil 37 besitzt einen zweiten Hebelschenkel 41, der sich von der Gelenkstelle 39 weg erstreckt und der an seinem der Gelenkstelle 39 entgegengesetzten Ende über ein Gelenk 70 verfügt, über das das Hebelteil 37 mit einem weiteren Hebelteil 42 schwenkbar gekoppelt ist.

Wie insbesondere in Figur 13 dargestellt, umfasst das Wirkelement 36 noch ein Wirkglied 43 aus biegeschlaffem Material, bei dem es sich beispielsweise um Elastomermaterial mit oder ohne Faserverstärkung handeln kann. Dies gewährleistet, dass sich das Wirkglied 43 optimal an die äußere Oberfläche des zu greifenden Objekts 12 anpassen kann. Das Wirkglied 43 ist als Lamelle oder Band ausgestaltet und ist einerseits am freien Ende des zweiten Hebelteils 42 und andererseits am freien Ende des mit der Gelenkstelle 40 ausgestatteten ersten Hebelschenkel 38 des ersten Hebelteils 37 gelenkig gelagert. Um in der Greifstellung eine gewisse Spannkraft auf das zu greifende Objekt 12 zu bringen, ist eine Spanneinrichtung 44 vorgesehen. Die Spanneinrichtung 44 umfasst im Beispielsfall einen Stoßdämpfer 45, der einerseits über eine Gelenkstelle 72 am zweiten Hebelteil 42 gelenkig gelagert ist und andererseits mit dem ersten Hebelteil 37 über eine weitere Gelenkstelle 71 gelenkig verbunden ist. Der Stoßdämpfer 45 ist im Beispielsfall als Gasdruckzylinder ausgebildet, wirkt also zwischen dem Hebelschenkel 38 und dem über das zweite Hebelteil 42 verschwenkbaren Wirkglied 43 und hält somit das lamellenartige Wirkglied unter Spannung.

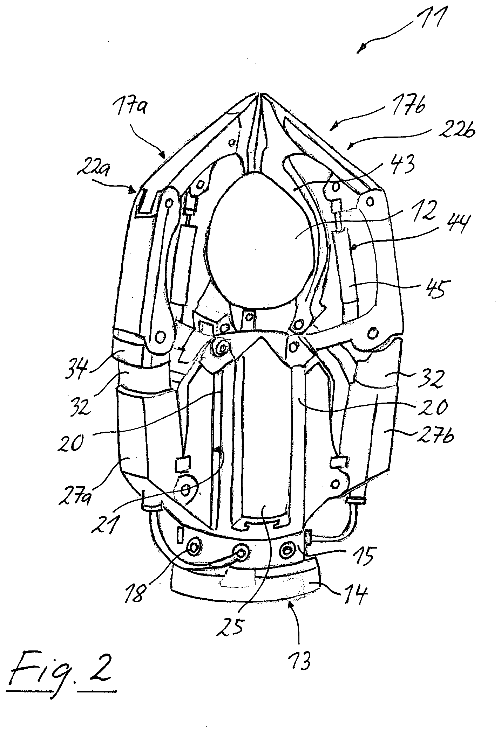

Wie insbesondere durch die Zusammenschau von Figur 1 und Figur 2 dargestellt, werden die Greifantriebe 27a-c zum Einleiten der Arbeitsbewegung mit Druckluft beaufschlagt, so dass das in das Zylindergehäuse eingefahrene Abtriebsteil 32 ausfährt, wie in Figur 11 dargestellt. Dabei ändert sich die Orientierung des Wirksystembasis-Glieds 34, da dieses um die Schwenkachse 35 verschwenkt, wodurch gleichzeitig das angekoppelte Wirkelement 36 auf das zu greifende Objekt zugeschwenkt wird. Dabei gelangt das biegeschlaffe Wirkglied 43 in Kontakt mit dem zu greifenden Objekt und legt sich an die im Beispielsfall konvexe Wölbung der Objektoberfläche an. Bei der Greifbewegung wird das obere, zweite Hebelteil 42 um das Gelenk 70 nach unten gezogen, wobei der Stoßdämpfer 45 dieser Bewegung entgegenwirkt. Durch diesen Gegendruck wird das Objekt 12 festgehalten.

Wie in Figur 1 und Figur 2 gezeigt, sind die Greifeinheiten 17a-c der Greifeinrichtung 11 für einen Raumgriff ausgerichtet. Dabei sind die Arbeitsebenen 46a-c der Greifelemente 22a-c radial bezüglich des Greifzentrums ausgerichtet. Die Greifelemente 22a-c verschwenken also bei Aktivierung des zugeordneten Greifantriebs in der jeweiligen Arbeitsebene 46a-c in radialer Richtung.

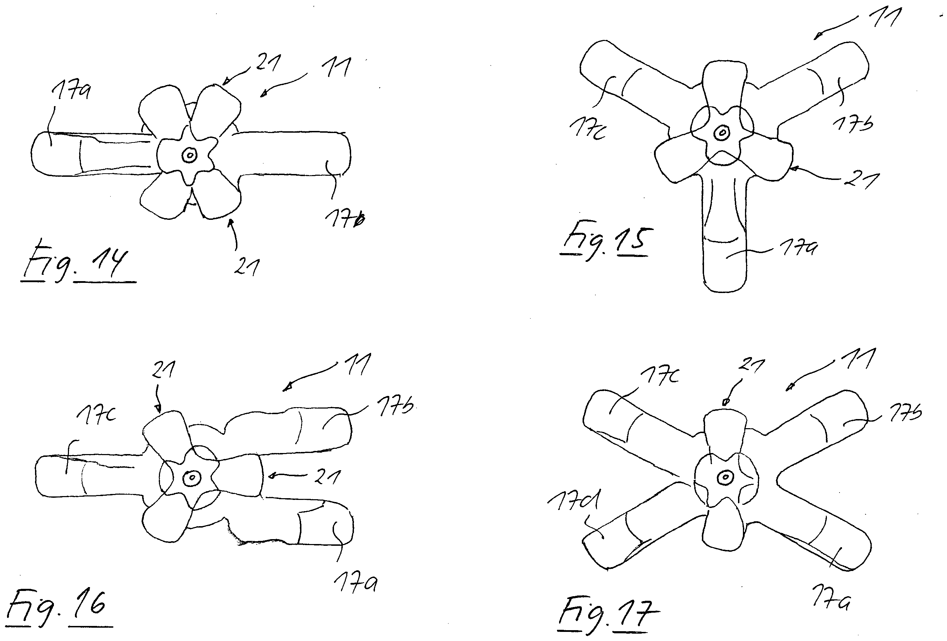

Wie insbesondere in Figur 17 gezeigt, ist dieser Raumgriff auch mit vier Greifeinheiten 17a-d und demnach vier Greifelementen 22a-d durchführbar. Theoretisch ließen sich auch sechs Greifelemente radial verschwenken. Der Raumgriff bzw. Radialgriff eignet sich besonders zum Greifen von voluminösen Objekten, wobei das zuvor beschriebene Wirkelement 36 besonders zum Festhalten konvex gewölbter Objekte 12 geeignet ist.

Sollen nun jedoch flächige, beispielsweise plattenartige Objekte gegriffen werden, so eignet sich dieser Raumgriff nicht. Um die Greifart auf Liniengriff zu wechseln umfasst die Greifeinrichtung 11 eine Verstellantriebseinrichtung 47 (Figur 3) mit wenigstens einem Verstellantrieb 48, wobei die Verstellantriebseinrichtung 47 wenigstens zwei der Greifeinheiten 17a, 17b zugeordnet ist, um die Arbeitsebenen 46a-c der Greifelemente 22a-c aktuatorisch durch eine Verstellbewegung zwischen radialer und parallel zueinander versetzter Ausrichtung zu verstellen.

Der Verstellantrieb 48 ist ebenfalls als pneumatischer Antrieb ausgebildet und verfügt über einen pneumatisch wirkenden Arbeitszylinder in Miniaturbauweise, der ähnlich oder identisch zum Greifantrieb ausgebildet sein kann. Der Verstellantrieb 48 verfügt über ein Zylindergehäuse (nicht dargestellt) in dem ein Verstellkolben mittel Fluiddruck verschieblich geführt ist. Der Verstellkolben ist mit einer Kolbenstange verbunden, die bei Fluiddruckbeaufschlagung aus dem Zylindergehäuse ausfahrbar ist. Es ist ein einfach wirkender Arbeitszylinder vorgesehen, so dass im Falle der Entlüftung des Zylinders eine Rückstellung mittels einer Rückstellfeder erfolgt. Wie insbesondere in Figur 3 dargestellt, ist die Kolbenstange mit einer Führungseinrichtung 49 verbunden, die an zwei links und rechts der Kolbenstange angeordneten Führungsstäben beweglich geführt ist. Die Führungseinrichtung umfasst einen Führungskörper 50, der über zwei Lageraugen verfügt, an denen Kopplungsmittel angreifen, die seinerseits eine Verstellbewegung auf die ihrerseits um eine Schwenkachse verschwenkbaren Basiseinheiten 20 der verstellbaren Greifeinheiten 17a, 17b übertragen.

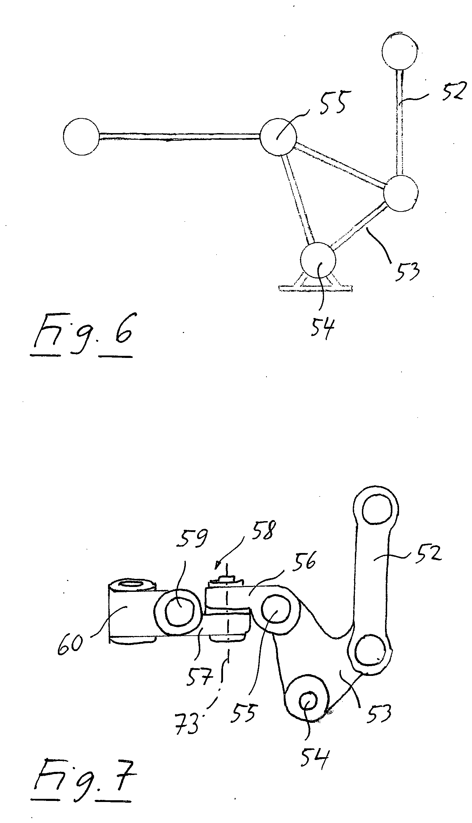

Die Kopplungsmittel umfassen ein Getriebe in Form eines Gelenkgetriebes, dessen kinematische Grundform in Figur 6 dargestellt ist. Das Gelenkgetriebe umfasst also zwei Getriebeketten, von denen in Figur 7 eine dargestellt ist. Jede dieser Getriebeketten ist einer verschwenkbaren Basiseinheit 20 zugeordnet. Die Getriebekette umfasst mehrere gelenkig miteinander verbundene Gelenkhebel. Es ist hier ein Pleuelhebel 52 vorgesehen, der einerseits schwenkbar am Lagerauge des Führungskörpers 50 gelagert ist und andererseits an einem Umlenkungsdreieck 53 schwenkbar gelagert ist. Das Umlenkungsdreieck 53 wiederum ist an einer ortsfesten Schwenkachse 54 schwenkbar gelagert. Das Umlenkungsdreieck 53 besitzt ein drittes Gelenk 55, das gelenkig mit einem Ausgleichelement 58 verbunden ist. Das Ausgleichselement 58 umfasst zwei Schwenkglieder 56, 57, an denen ein erstes Schwenkglied 56 an der Schwenkachse 55 mit dem Umlenkungsdreieck 53 schwenkbar verbunden ist und andererseits über ein Ausgleichsgelenk 73, dessen Gelenkachse vertikal also in Ausrichtung des Pleuelhebels 52 ausgerichtet ist. Das andere Schwenkglied 57 ist einerseits über das Ausgleichsgelenk 73 mit dem ersten Schwenkglied 56 verbunden und andererseits über eine horizontale Gelenkachse 59 mit einem Lagerbuchsenglied 60 schwenkbar verbunden. Das Lagerbuchsenglied 60 wiederum ist in der montierten Stellung in eine Aufnahme am zugeordneten Basiselement 20 eingetaucht und dort um ein in der Basiseinheit 20 untergebrachtes Schwenkachsglied schwenkbar angeordnet. An der Basiseinheit 20 wiederum sitzt die Schwenkachse 51 der Basiseinheit 20 und zwar exzentrisch zur Schwenkachse des Lagerbuchsenglieds 60.

In identischer Weise ist die Basiseinheit 20 in der anderen verstellbaren Greifeinheit angekoppelt.

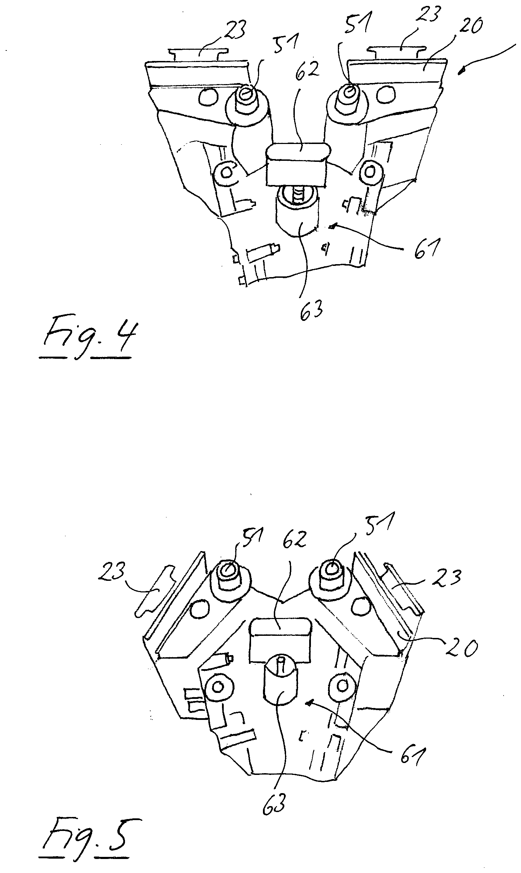

Um die beiden verstellbaren Greifeinheiten 17a, 17b zwischen dem in den Figuren 1 und 2 gezeigten Raumgriff, und dem in Figur 16 gezeigten Lineargriff zu verstellen, wird der Stellantrieb 48, der auf beide Basiseinheiten 20 gleichzeitig wirkt, womit diese synchron verstellt werden, aktiviert. Wie insbesondere die Zusammenschau der Figuren 4 und 5 zeigt, wird ausgehend von der in Figur 5 dargestellten Stellung der beiden Basiseinheiten der gemeinsame Verstellantrieb 48 aktiviert, indem er mit Druckluft beaufschlagt wird. Dabei fährt die Kolbenstange aus dem Zylindergehäuse aus, so dass der Führungskörper 50 an den Führungsstangen nach oben bewegt wird, wodurch auch die beiden Pleuelhebel 52 nach oben bewegt werden. Dies hat zur Folge, dass die beiden Umlenkungsdreiecke 53 um die Schwenkachse 54 in Gegen-Uhrzeigerrichtung verschwenken, was insgesamt Druck auf das angekoppelte Ausgleichselement 58 gibt, das gemäß Figur 7 nach links bewegt wird, so dass das Lagerbuchsenglied 60 und das angekoppelte Schwenkachsglied der Basiseinheit 20 in Uhrzeigerrichtung ausklappen, bis die in Figur 4 gezeigte Stellung erreicht ist. Bei dieser Bewegung kann das Ausgleichselement 58 ausknicken, da es um das Ausgleichsgelenk 73 gelagert ist.

Um die in Figur 4 oder die in Figur 5 gezeigte Stellung zu blockieren, ist eine Blockiereinrichtung 61 vorgesehen, die im Beispielsfall ein Blockierelement 62 aufweist. Wie insbesondere in den Figuren 4 und 5 gezeigt, ist das Blockierelement 62 zwischen einer die Schwenkbewegung der beiden Basiseinheiten 20 blockierenden Blockierstellung und die Schwenkbewegung der beiden Basiseinheiten 20 ermöglichenden Freigabestellung verstellbar. Zur Verstellung des Blockierelements 62 dient ein Blockierantrieb 63, der ebenfalls als fluidischer, insbesondere pneumatischer Antrieb ausgebildet ist.

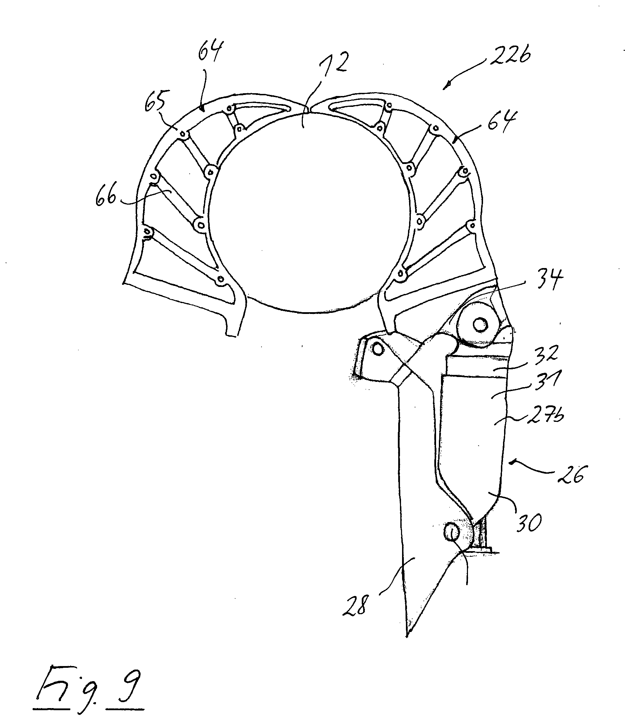

Figur 8 zeigt ein zweites Ausführungsbeispiel der erfindungsgemäßen Greifeinrichtung 11. Das zweite Ausführungsbeispiel unterscheidet sich von dem zuvor beschriebenen ersten Ausführungsbeispiel durch die andersartige Ausgestaltung der Wirkelemente 36 der Greifelemente 22a-c. Gemäß zweitem Ausführungsbeispiel sind die Wirkelemente 36 als Flossenstrahlelemente 64 ausgestaltet, die aus einer spitzen, dreieckförmigen Hülle 65 besteht, die durch Stifte gelenkig mit Querstreben 66 verbunden ist. Das Flossenstrahlelement 64 wird bei der Montage am Wirksystem-Basisglied 34 montiert. Aufgrund der Flexibilität der Hülle 65, verbunden mit den gelenkigen Querstreben 66, passt sich das Flossenstrahlelement 64 ebenfalls passgenau an die konvexe Oberfläche des zu greifenden Objekts 12 an, wie in Figur 9 gezeigt.

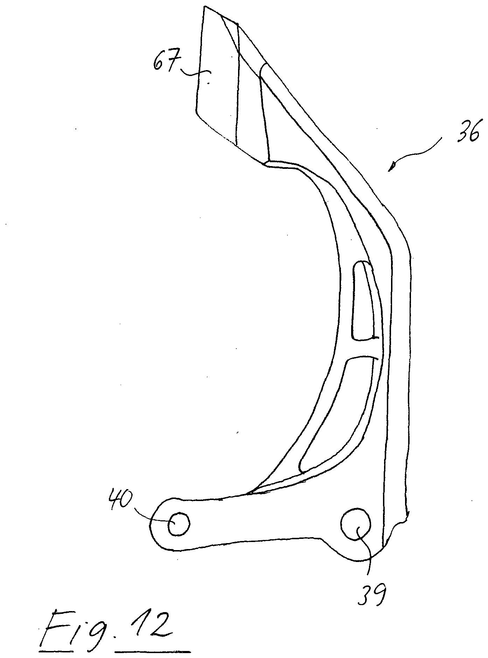

Figur 12 zeigt schließlich eine weitere Ausführungsform des Wirkelements 36. Das Wirkelement 36 besteht gemäß drittem Ausführungsbeispiel aus einem einteiligen Hebel, an dessen freiem Ende eine Fingerspitze 67 beispielsweise aus Elastomermaterial angeordnet ist.

## Patentansprüche

1. Greifeinrichtung zum Greifen von Objekten (12), mit wenigstens zwei Greifeinheiten (17a-b), die durch eine Arbeitsbewegung zwischen einer Freigabestellung und einer das Objekt (12) greifenden Greifstellung bewegbar sind, wobei die Greifeinheiten (17a-b) jeweils Greifelemente (22a-b) aufweisen, die mit Wirkelementen (36) bestückt sind, die in der Greifstellung in Anlage zum zu greifenden Objekt (12) sind, wobei das Wirkelement (36) ein Wirkglied (43) aus sich an die Kontur des zu greifenden Objekts (12) anpassendem biegeschlaffem Material aufweist, und wobei eine Spanneinrichtung (44) zum Spannen des Wirkglieds (43) bei Anlage an das zu greifende Objekt (12) vorgesehen ist, **dadurch gekennzeichnet, dass** die Spanneinrichtung (44) wenigstens einen Stoßdämpfer (45) aufweist.

2. Greifeinrichtung nach Anspruch 1, **dadurch gekennzeichnet, dass** das Wirkglied (43) bandförmig ausgebildet ist.

3. Greifeinrichtung nach Anspruch 1 oder 2, **dadurch gekennzeichnet, dass** das biegeschlaffe Material ein Gelege, Gewebe oder Gestricke ist.

4. Greifeinrichtung nach Anspruch 3, **dadurch gekennzeichnet, dass** ein aus Kunststofffasern bestehendes Gelege vorgesehen ist, wobei vorzugsweise Aramidfasern vorgesehen sind.

5. Greifeinrichtung nach einem der vorhergehenden Ansprüche, **dadurch gekennzeichnet, dass** das biegeschlaffe Material des Wirkglieds (43) mit einem Schutzmantel versehen ist.

6. Greifeinrichtung nach Anspruch 5, **dadurch gekennzeichnet, dass** der Schutzmantel aus Elastomermaterial besteht.

7. Greifeinrichtung nach einem der vorhergehenden Ansprüche, **dadurch gekennzeichnet, dass** die Greifelemente (22a-b) eine Greifelementbasis (26) mit einer Befestigungsschnittstelle zur lösbaren Befestigung des Wirkelements (36) aufweisen.

8. Greifeinrichtung nach einem der vorhergehenden Ansprüche, **dadurch gekennzeichnet, dass** wenigstens drei Greifeinheiten (17a-c) vorgesehen sind, die derart um ein Greifzentrum herum gruppiert sind, dass die wenigstens drei Arbeitsebenen (46a-c) ihrer Greifelemente (22a-c) winkelig und radial bezüglich des Greifzentrums oder parallel versetzt zueinander ausgerichtet sind.

9. Greifeinrichtung nach Anspruch 8, **dadurch gekennzeichnet, dass** wenigstens zwei der drei Greifeinheiten (17a-b) eine Verstellantriebseinrichtung (47) mit wenigstens einem Verstellantrieb (48) zugeordnet ist, um die Arbeitsebenen (46a-c) der Greifelemente (22a-c) aktuatorisch durch eine Verstellbewegung zwischen radialer und parallel zueinander versetzter Ausrichtung zu verstellen.

10. Greifeinrichtung nach einem der vorhergehenden Ansprüche, **dadurch gekennzeichnet, dass** die Greifeinheiten (17a-c) jeweils eine Basiseinheit (20) aufweisen, die eine Befestigungsschnittstelle (21) zur lösbaren Befestigung der zugeordneten Greifelemente (22a-c) aufweisen.

11. Greifeinrichtung nach einem der vorhergehenden Ansprüche, **dadurch gekennzeichnet, dass** die Greifeinheiten (17a-c) jeweils einen individuellen Greifantrieb (27a-c) aufweisen, über den die Arbeitsbewegung zwischen der Greif- und der Offenstellung erzeugbar ist.

## Claims

1. Gripping device for the gripping of objects (12), with at least two gripping units (17a-b) which may be moved by an operating movement between a release position and a gripping position in which they grip the object (12), wherein the gripping units (17a-b) each have gripping elements (22a-b) which are equipped with effective elements (36) which in the gripping position are in contact with the object (12) to be gripped, wherein the effective element (36) has an effective member (43) of material, slack in bending, matched to the contour of the object (12) to be gripped, and wherein a clamping device (44) is provided for clamping the effective member (43) on contact with the object (12) to be gripped, **characterised in that** the clamping device (44) has at least one shock absorber (45).

2. Gripping device according to claim 1, **characterised in that** the effective member (43) is ribbon-like in form.

3. Gripping device according to claim 1 or 2, **characterised in that** the material which is slack in bending is a nonwoven, woven or knitted fabric.

4. Gripping device according to claim 3, **characterised in that** a nonwoven fabric made of synthetic fibres is provided, wherein preferably aramid fibres are provided.

5. Gripping device according to any of the preceding claims, **characterised in that** the material of the effective member (43) which is slack in bending is provided with a protective cover.

6. Gripping device according to claim 5, **characterised in that** the protective cover is made of elastomer material.

7. Gripping device according to any of the preceding claims, **characterised in that** the gripping elements (22a-b) have a gripping element base (26) with a mounting interface for releasable attachment of the effective element (36).

8. Gripping device according to any of the preceding claims, **characterised in that** at least three gripping units (17a-c) are provided and are so grouped around a gripping centre that the three or more operating planes (46a-c) of their gripping elements (22a-c) are aligned at an angle and radially relative to the gripping centre or offset parallel to one another.

9. Gripping device according to claim 8, **characterised in that** at least two of the three gripping units (17a-b) are assigned an adjusting drive unit (47) with at least one adjusting drive (48) in order to shift the operating planes (46a-c) of the gripping elements (22a-c) by actuation involving an adjusting movement between radial and offset parallel alignment.

10. Gripping device according to any of the preceding claims, **characterised in that** each of the gripping units (17a-c) has a base unit (20) with a mounting interface (21) for releasable attachment of the assigned gripping elements (22a-c).

11. Gripping device according to any of the preceding claims, **characterised in that** each of the gripping units (17a-c) has an individual gripping drive (27a-c), through which the operating movement between the gripping and the open position may be generated.

## Revendications

1. Dispositif de préhension pour saisir des objets (12), avec au moins deux unités de préhension (17a-b), qui sont déplaçables par un mouvement de travail entre une position de libération et une position de préhension saisissant l'objet (12), dans lequel les unités de préhension (17a-b) présentent respectivement des éléments de préhension (22a-b) qui sont équipés d'éléments actifs (36) qui, dans la position de préhension, sont en butée contre l'objet (12) à saisir, dans lequel l'élément actif (36) présente un organe actif (43) en un matériau souple en flexion qui s'adapte au contour de l'objet (12) à saisir, et dans lequel est prévu un dispositif de serrage (44) pour serrer l'organe actif (43) en cas de butée sur l'objet (12) à saisir, **caractérisé en ce que** le dispositif de serrage (44) présente au moins un amortisseur (45).

2. Dispositif de préhension selon la revendication 1, **caractérisé en ce que** l'organe actif (43) est réalisé en forme de bande.

3. Dispositif de préhension selon la revendication 1 ou 2, **caractérisé en ce que** le matériau souple en flexion est une nappe, un tissu ou un tricot.

4. Dispositif de préhension selon la revendication 3, **caractérisé en ce qu'**est prévue une nappe constituée de fibres en matière plastique, dans lequel des fibres d'aramide sont de préférence prévues.

5. Dispositif de préhension selon l'une des revendications précédentes, **caractérisé en ce que** le matériau souple en flexion de l'organe actif (43) est pourvu d'une gaine de protection.

6. Dispositif de préhension selon la revendication 5, **caractérisé en ce que** la gaine de protection est composée de matériau élastomère.

7. Dispositif de préhension selon l'une des revendications précédentes, **caractérisé en ce que** les éléments de préhension (22a-b) présentent une base d'élément de préhension (26) avec une interface de fixation pour la fixation amovible de l'élément actif (36).

8. Dispositif de préhension selon l'une des revendications précédentes, **caractérisé en ce qu'**au moins trois unités de préhension (17a-c) sont prévues qui sont regroupées autour d'un centre de préhension de telle sorte que les au moins trois plans de travail (46a-c) de leurs éléments de préhension (22a-c) sont orientés de manière angulaire et radiale par rapport au centre de préhension ou avec un décalage parallèle les uns par rapport aux autres.

9. Dispositif de préhension selon la revendication 8, **caractérisé en ce qu'**un dispositif d'entraînement de réglage (47) avec au moins un entraînement de réglage (48) est affecté à au moins deux des trois unités de préhension (17a-b) pour régler les plans de travail (46a-c) des éléments de préhension (22a-c) de manière actionnée par un mouvement de réglage entre une orientation radiale et une orientation de décalage parallèlement les uns par rapport aux autres.

10. Dispositif de préhension selon l'une des revendications précédentes, **caractérisé en ce que** les unités de préhension (17a-c) présentent respectivement une unité de base (20) qui présente une interface de fixation (21) pour la fixation amovible des éléments de préhension (22a-c) affectés.

11. Dispositif de préhension selon l'une des revendications précédentes, **caractérisé en ce que** les unités de préhension (17a-c) présentent respectivement un entraînement de préhension individuel (27a-c) par lequel le mouvement de travail entre les positions de préhension et d'ouverture peut être généré.
